# EUROPEAN PATENT SPECIFICATION

(11) **EP 3 618 453 B1**
(45) Date of publication and mention of the grant of the patent: **07.06.2023**
(21) Application number: 19193320.9
(22) Date of filing: 23.08.2019
(51) Int. Cl.: H04R 1/28, H04R 1/34

(54) **HEAD-MOUNTED DISPLAY APPARATUS AND ACOUSTIC DEVICE**
KOPFMONTIERTE ANZEIGEVORRICHTUNG UND AKUSTISCHE VORRICHTUNG
VISIOCASQUE ET DISPOSITIF ACOUSTIQUE

(30) Priority: 28.08.2018 TW 107130214
(43) Date of publication of application: 04.03.2020
(73) Proprietor: Acer Incorporated, Taipei County 221 (TW)
(72) Inventor: TAI, Kuei-Ting, 221 New Taipei City (TW); CHANG, Jia-Ren, 221 New Taipei City (TW); WEN, Chun-Hung, 221 New Taipei City (TW)
(74) Representative: 2K Patentanwälte Blasberg Kewitz & Reichel

(56) References cited:
- EP-A1- 3 244 631
- JP-A- H08 172 691
- JP-A- 2013 093 808
- US-A1- 2015 129 351

## Description

### CROSS-REFERENCE TO RELATED APPLICATIONS

This Application claims priority of Taiwan Patent Application No. 107130214 filed on Aug. 28, 2018.

### BACKGROUND OF THE INVENTION

### Field of the Invention

The present disclosure relates to a display apparatus and an acoustic device, and in particular to a head-mounted display apparatus and an acoustic device disposed in the head-mounted display apparatus.

### Description of the Related Art

Conventional head-mounted displays are available on the consumer market. Conventional head-mounted displays are worn on the user's head and provide a flat image or stereoscopic image for the user to view. Conventional head-mounted displays include a display panel and two lenses, each of which corresponds to one of the user's eyes. The display panel is used to display a left-eye image and a right-eye image, which enter the left and right eyes of the user via the lenses. When the user's left eye views the left-eye image and the right eye views the right-eye image, the user perceives a stereoscopic image. Such displays are e.g. known from EP 3 244 631 A1, US 2015/129351 A1, JP 2013 093808 A and JP H08 172691 A.

In general, when a user wears a head-mounted display, headphones are worn on the ears. However, when head-mounted displays are used by the general public in public places (such as electronic playgrounds, exhibition venues, or museums), head-mounted displays are used and re-used by many users, running the risk of spreading germs and thereby causing health problems.

Although existing head-mounted displays have been generally adequate for their intended purposes, they have not been entirely satisfactory in all respects. Consequently, it would be desirable to provide a solution for improving the head-mounted displays.

### BRIEF SUMMARY OF THE INVENTION

The above problem is solved by a head-mounted display apparatus according to claim 1. Advantageous embodiments are the subject of the dependent claims. When the user wears a head-mounted display apparatus, it does not touch the user's ears yet still provides good sound quality.

The disclosure provides a head-mounted display apparatus including a display device, an acoustic device, and a wearing structure. The display device includes an outer casing and a display panel. The outer casing includes a display portion and a wearing portion connected to the display portion. The display panel is disposed in the display portion.

The acoustic device includes a speaker, a resonance box and a waveguide. The speaker is disposed in the outer casing, and adjacent to the display panel. The speaker comprises a speaker housing and a diaphragm disposed in the speaker housing, and the speaker housing comprising an acoustic surface, an acoustic outlet formed on the acoustic surface, and a rear surface opposite to the acoustic surface. The resonance box is connected to the acoustic surface of the speaker housing. The waveguide is connected to the resonance box and the wearing portion. The wearing structure is connected to the outer casing. The volume of the waveguide is greater than 2 times the volume of the speaker. The length of the waveguide which is measured along a wave path is greater than 5 times the thickness of the speaker between the acoustic surface and the rear surface, wherein the waveguide comprises a connection portion connected to the resonance box and an extension portion connected to the connection portion, wherein a maximum length of the connection portion which is measured in an extension direction is about 0.8 times to 5 times the maximum thickness of the extension portion which is measured in the extension direction. The minimum thickness of the extension portion is in a range from about 3 mm to 8 mm. The connection portion extends in the extension direction, and the extension portion extends in a direction that is perpendicular to the extension direction.

In some embodiments, the display device further includes lenses disposed on the display portion and that face the display panel. In some embodiments, the speaker is located in the display portion. The waveguide has an acoustic outlet located at an end portion of the wearing portion.

In some embodiments, the length of the waveguide is in a range from about 5 cm to 20 cm. In some embodiments, the resonance box and the waveguide are made of a hard material.

In some embodiments, the waveguide comprises a connection portion connected to the resonance box and an extension portion connected to the connection portion, and the extension portion extends along a wave path. In some embodiments, the extension portion substantially extends along a wave path or a linear path.

In some embodiments, the speaker includes a speaker housing and a diaphragm, the speaker housing has a receiving cavity, and the diaphragm is disposed in the receiving cavity. The volume of the receiving cavity is in a range from about 0.6 cm³ to 2 cm³.

In some embodiments, the waveguide has a waveguide cavity, an acoustic inlet connected to the waveguide cavity, and an acoustic outlet connected to the waveguide cavity. The acoustic inlet and the acoustic outlet of the waveguide are located at two opposite sides of the waveguide cavity, and the acoustic inlet of the waveguide faces the resonance box. The volume of the waveguide cavity is in a range from about 2 cm³ to 8 cm³.

In some embodiments, the resonance box has a resonance cavity, an acoustic inlet connected to the resonance cavity, and an acoustic outlet connected to the resonance cavity. The acoustic inlet of the resonance box corresponds to the diaphragm, and the acoustic outlet of the resonance box faces the waveguide. The volume of the resonance cavity is less than or equal to the volume of the receiving cavity.

In some embodiments, the speaker housing further includes a receiving cavity, an acoustic surface, and an acoustic outlet formed on the acoustic surface and connected to the receiving cavity. The diaphragm is adjacent to the acoustic surface, and the resonance box is connected to the acoustic surface.

In conclusion, the head-mounted display apparatus of the present disclosure can provide sound to the user without contacting the user's ears by the acoustic device, thereby reducing the health problems caused by the user wearing the head-mounted display apparatus. Moreover, the sound quality of the acoustic device can be improved by the design of the waveguide.

### BRIEF DESCRIPTION OF THE DRAWINGS

The invention can be more fully understood by reading the subsequent detailed description and examples with references made to the accompanying drawings, wherein:
Fig. 1 is a perspective view of the head-mounted display apparatus in accordance with some embodiments of the disclosure.
Fig. 2 is a schematic view of the display device in accordance with some embodiments of the disclosure.
Fig. 3 is a perspective view of the acoustic device in accordance with the first embodiment of the disclosure.
Fig. 4 is a schematic view of the acoustic device in accordance with the first embodiment of the disclosure.
Fig. 5 is a schematic view of the acoustic device in accordance with the second embodiment of the disclosure.
Fig. 6 is a schematic view of the acoustic device in accordance with the third embodiment of the disclosure.
Fig. 7 is a schematic view of the acoustic device in accordance with the fourth embodiment of the disclosure.
Fig. 8 is a schematic view of the acoustic device in accordance with the fifth embodiment of the disclosure.
Fig. 9 is a schematic view of the acoustic device in accordance with the sixth embodiment of the disclosure.

### DETAILED DESCRIPTION OF THE INVENTION

The following disclosure provides many different embodiments, or examples, for implementing different features of the present disclosure. Specific examples of components and arrangements are described below to simplify the present disclosure. For example, the formation of a first feature over or on a second feature in the description that follows may include embodiments in which the first and second features are formed in direct contact, and may also include embodiments in which additional features may be formed between the first and second features, such that the first and second features may not be in direct contact.

Spatially relative terms, such as upper and lower, may be used herein for ease of description to describe one element or feature's relationship to other elements or features as illustrated in the figures. The spatially relative terms are intended to encompass different orientations of the device in use or operation in addition to the orientation depicted in the figures. Moreover, the shape, size, and thickness depicted in the drawings may not be drawn to scale or may be simplified for clarity of discussion; these drawings are merely intended for illustration.

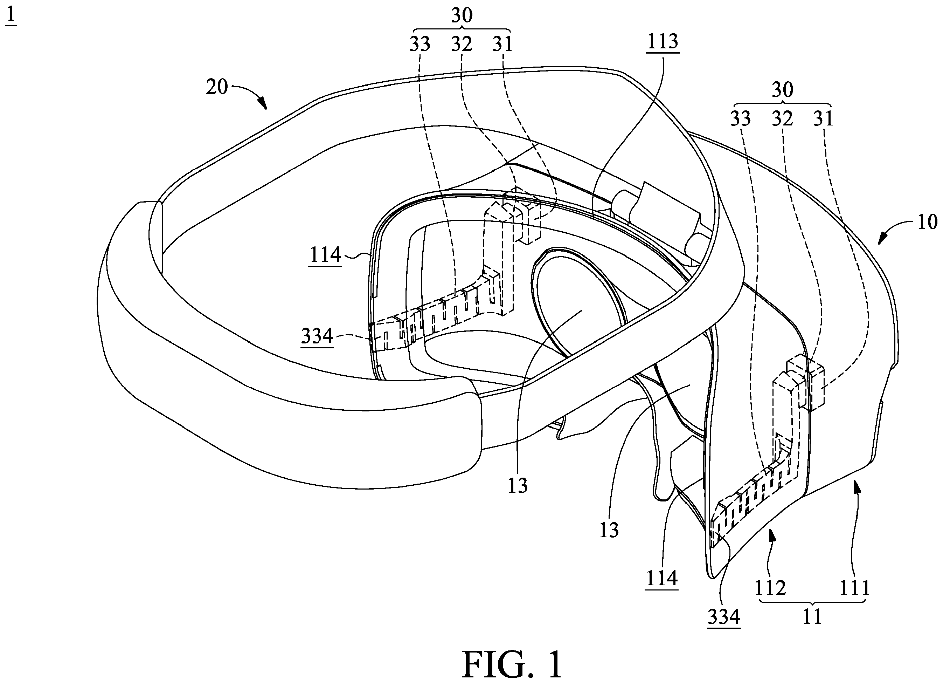

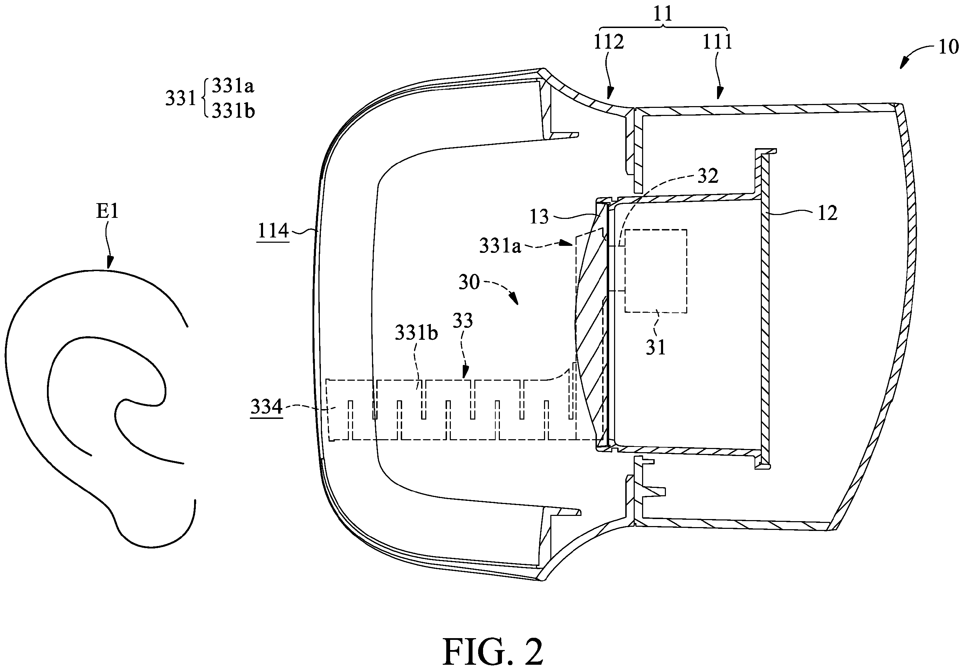

Fig. 1 is a perspective view of the head-mounted display apparatus 1 in accordance with some embodiments of the disclosure. Fig. 2 is a schematic view of the display device 10 in accordance with some embodiments of the disclosure. The head-mounted display apparatus 1 can be worn on the user's head, and configured to provide a flat image or a stereoscopic image for the user to watch. In some embodiments, the head-mounted display apparatus 1 may be a head-mounted virtual reality apparatus.

The head-mounted display apparatus 1 includes a display device 10 and a wearing structure 20. The wearing structure 20 is connected to the display device 10. In this embodiment, the wearing structure 20 may be a ring structure, and pivot on the display device 10. In some embodiments, the wearing structure 20 is a U-shaped structure. Two ends of the wearing structure 20 are connected to two sides of the display device 10. When the user wears the head-mounted display apparatus 1, the wearing structure 20 can be placed on the head. Afterward, the display device 10 is attached to the face and corresponds to the eyes of the user.

The display device 10 includes an outer casing 11, a display panel 12, and two lenses 13. In this embodiment, the outer casing 11 has a display portion 111 and a wearing portion 112. The wearing portion 112 is connected to the display portion 111. In some embodiments, the wearing structure 20 pivots on the top of the display portion 111. In some embodiments, two ends of the wearing structure 20 are connected to two sides of the display portion 111 or the wearing portion 112.

The wearing portion 112 is connected to the display portion 111. The wearing portion 112 has a curved edge 113, which matches the shape of the user's face. When the user wears the head-mounted display apparatus 1, the display portion 111 is separated from the user's eye, and the curved edge 113 of the wearing portion 112 comes into contact with the user's face.

The display panel 12 is disposed in the display portion 111 of the outer casing 11. The display panel 12 may be a liquid-crystal display panel (LCD panel) or an organic light-emitting diode panel (OLED panel), and configured to display an image. In some embodiments, the display panel 12 may be a screen of a mobile device such as a mobile phone.

In some embodiments, the image includes a left-eye image and a right-eye image. The left-eye image corresponds to the user's left eye, and the right-eye image corresponds to the user's right eye. In some embodiments, there are two display panels 12. One of the display panels 12 displays the left-eye image, and the other displays the right-eye image. The left-eye image may be the same or different than the right-eye image.

The lenses 13 are disposed on the display portion 111 of the outer casing 11, and face the display panel 12. The lenses 13 are close to the wearing portion 112. In this embodiment, the lenses 13 are convex lenses. When the user wears the head-mounted display apparatus 1, each of the lenses 13 corresponds to one of the user's eyes. In some embodiments, there are at least four lenses 13. Some of the lenses 13 correspond to the user's left eye, and some of the lenses 13 correspond to the user's right eye.

The image generated by the display panel 12 is projected to the left and right eyes of the user via the lenses 13. When the head-mounted display apparatus 1 provides a stereoscopic image (3D image), the display panel 12 displays a left-eye image and a right-eye image that is different than the left-eye image. When the user's left eye sees the left-eye image and the right eye sees the right-eye image, the user perceives a stereoscopic image.

When the head-mounted display apparatus 1 provides a flat image (2D image), the display panel 12 displays a left-eye image and a right-eye image, wherein the right-eye image is the same as the left-eye image. When the user's left eye sees the left-eye image and the right eye sees the right-eye image, the user perceives a flat image.

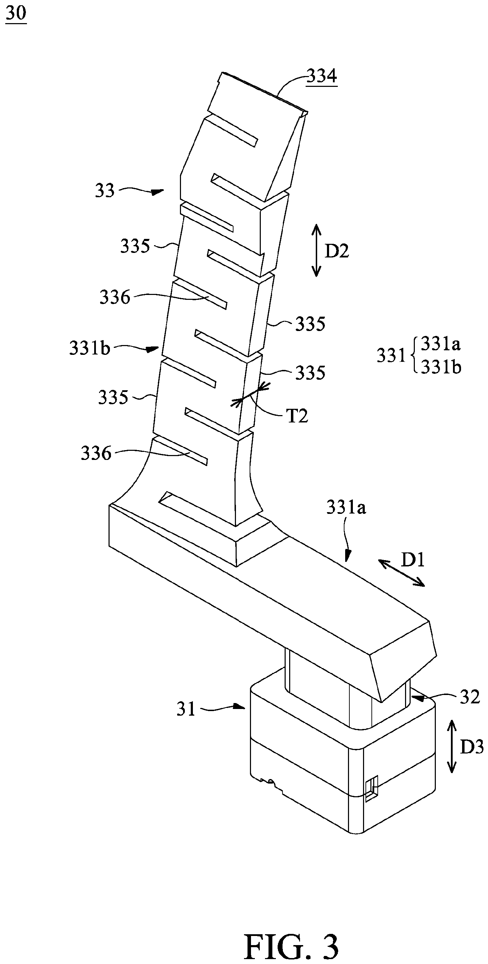

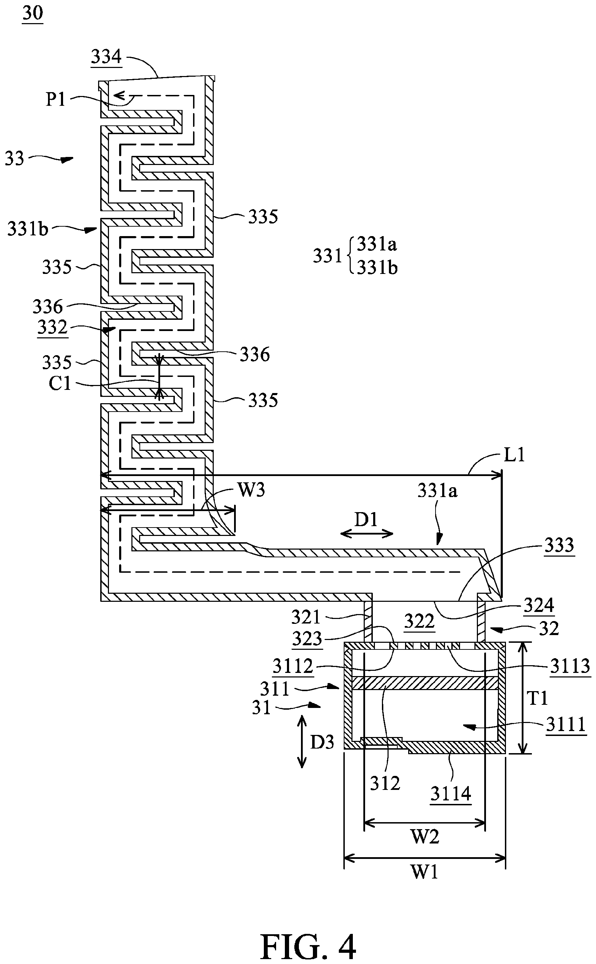

Fig. 3 is a perspective view of the acoustic device 30 in accordance with the first embodiment of the disclosure. Fig. 4 is a schematic view of the acoustic device 30 in accordance with the first embodiment of the disclosure. The head-mounted display apparatus 1 further includes an acoustic device 30. The acoustic device 30 is disposed in the display device 10, and is configured to provide sound.

The acoustic device 30 includes a speaker 31, a resonance box 32, and a waveguide 33. The speaker 31 is disposed on the display portion 111 of the outer casing 11, adjacent to the display panel 12. In some embodiments, the speaker 31 is disposed in the wearing portion 112, and adjacent to the display portion 111.

The resonance box 32 is connected to the speaker 31, and located in the display portion 111. In some embodiments, the resonance box 32 is connected to the wearing portion 112. The waveguide 33 is connected to the resonance box 32, and may be connected to the wearing portion 112. In some embodiments, the waveguide 33 is embedded in the wearing portion 112.

When the user wears the head-mounted display apparatus 1, the acoustic outlet 334 of the waveguide 33 is close to the user's ears E1. The sound generated by the speaker 31 enters into the waveguide 33 via the resonance box 32, and transmits to the user's ears E1 via the acoustic outlet 334.

In some embodiments, the distance between the acoustic outlet 334 and the user's ears E1 is in a range from about 1 cm to 10 cm. In this embodiment, the distance between the acoustic outlet 334 and the user's ears E1 is about 5 cm. By using the acoustic device 30 away from the user's ears E1, the health problems caused by the user wearing the head-mounted display apparatus 1 can be reduced. Moreover, when the head-mounted display apparatus 1 is worn on the head of different users, the acoustic device 30 does not easily come in contact with the users' ears E1.

Furthermore, since the user does not need to wear an earphone on the ear, the time required for the user to put on and take off the head-mounted display apparatus 1 can be reduced.

The speaker 31 includes a speaker housing 311 and a diaphragm 312. The speaker housing 311 has a receiving cavity 3111, an acoustic surface 3112, one or more acoustic outlets 3113, and a rear surface 3114 opposite to the acoustic surface 3112. The receiving cavity 3111 is located in the speaker housing 311. The acoustic outlet 3113 is formed on the acoustic surface 3112, and connected to the receiving cavity 3111. In some embodiments, the volume of the receiving cavity 3111 is in a range from about 0.6 cm³ to 2 cm³. In this embodiment, the volume of the receiving cavity 3111 is about 1 cm³.

The diaphragm 312 is disposed in the receiving cavity 3111. The diaphragm 312 is adjacent to the acoustic surface 3112, and far from the rear surface 3114. In this embodiment, the diaphragm 312 generates sound by vibrating diaphragm 312, and the sound generated by the diaphragm 312 may resonate within the receiving cavity 3111. Moreover, the sound generated by the diaphragm 312 is transmitted to the resonance box 32 via the acoustic surface 3112 and the acoustic outlet 3113.

In this embodiment, the diaphragm 312 extends in an extension direction D1. The acoustic surface 3112 may be parallel to the diaphragm 312 and the extension direction D1.

The resonance box 32 is connected to the acoustic surface 3112 of the speaker housing 311. The resonance box 32 may be made of a hard material, such as hard plastic or metal. The resonance box 32 includes a resonance housing 321. The resonance housing 321 has a resonance cavity 322, an acoustic inlet 323, and an acoustic outlet 324. The acoustic inlet 323 is connected to the resonance cavity 322, and corresponds to the acoustic outlet 3113 of the speaker housing 311 and the diaphragm 312. The acoustic outlet 324 is connected to the resonance cavity 322, and opposite to the acoustic inlet 323. The acoustic outlet 324 faces the acoustic inlet 333 of the waveguide 33, and face the acoustic inlet 323. The acoustic inlet 323 and the acoustic outlet 324 may be parallel to the diaphragm 312.

In this embodiment, the volume of the resonance cavity 322 is less than or equal to the volume of the receiving cavity 3111. In some embodiments, the volume of the resonance cavity 322 may be 0.5 times to 1 time the volume of the receiving cavity 3111. The volume of the resonance cavity 322 may be in a range from about 0.3 cm³ to 2 cm³.

In this embodiment, the width W1 of the speaker 31 is about 1 time to 1.5 times the width W2 of the resonance box 32. In this embodiment, the width W1 of the speaker 31 may be 1.1 or 1.2 times the width W2 of the resonance box 32. The widths W1 and W2 are measured in the extension direction D1.

The waveguide 33 is connected to the resonance box 32. The waveguide 33 may be made of a hard material, such as hard plastic or metal. The volume of the waveguide 33 is greater than 2 or 3 times the volume of the speaker 31. In some embodiments, the volume of the waveguide 33 is about 2 times to 8 times the volume of the speaker 31.

In this embodiment, the waveguide 33 substantially extends in an extension direction D2, and the waveguide 33 extends along a wave path P1. In the disclosure, the length of the waveguide 33 is measured along the wave path P1. The length of the waveguide 33 is greater than 5 times the thickness T1 of the speaker 31. In some embodiments, the length of the waveguide 33 is 5 times to 15 times the thickness T1 of the speaker 31. The thickness T1 of the speaker 31 is measured in an extension direction D3.

In this embodiment, the length of the waveguide 33 is in a range from about 5 cm to 20 cm. In this embodiment, the length of the waveguide 33 is about 15 cm. The thickness T1 of the speaker 31 is in a range from about 0.5 cm to 1.5 cm. In this embodiment, the thickness T1 of the speaker 31 is about 0.8 cm.

In this embodiment, the extension direction D2 is substantially perpendicular to the extension direction D1. The extension direction D3 may be substantially perpendicular to extension direction D1. The extension direction D2 is inclined relative to the extension direction D3. The angle between the extension direction D2 and the extension direction D3 is less than 30 degrees.

The waveguide 33 includes a waveguide housing 331. The waveguide housing 331 has a waveguide cavity 332, an acoustic inlet 333, and an acoustic outlet 334. The volume of the waveguide cavity 332 is in a range from about 2 cm³ to 8 cm³. In this embodiment, the volume of the waveguide cavity 332 is about 3 cm³. The volume of the waveguide 33 is greater than 2 or 3 times the volume of the speaker 31. In some embodiments, the volume of the waveguide 33 is about 2 times to 8 times the volume of the speaker 31.

The minimum cross-sectional area C1 of the waveguide cavity 332 perpendicular to the extension direction D1 is in a range from about 8 square millimeters to 60 square millimeters. In some embodiments, the minimum cross-sectional area C1 of the waveguide cavity 332 perpendicular to the extension direction D1 is about 9 square millimeters.

The acoustic inlet 333 is connected to the waveguide cavity 332, and faces the resonance box 32. In this embodiment, the acoustic inlet 333 is connected to the acoustic outlet 324. The acoustic outlet 334 is connected to the waveguide cavity 332. The acoustic inlet 333 and the acoustic outlet 334 are located at two opposite sides of the waveguide cavity 332.

The area of the acoustic outlet 334 is in a range from about 6 square millimeters to 20 square millimeters. In this embodiment, the area of the acoustic outlet 334 is about 9 square millimeters. As shown in Fig. 1 and Fig. 2, the acoustic outlet 334 is located at the end portion 114 of the wearing portion 112.

In this embodiment, the waveguide housing 331 includes a connection portion 331a and an extension portion 331b. The connection portion 331a is connected to the resonance box 32, and the extension portion 331b is connected to the connection portion 331a. The connection portion 331a may substantially extend in the extension direction D1. The extension portion 331b may substantially extend in the extension direction D2. In this embodiment, the extension portion 331b extends along a wave path P1. As shown in Fig. 1, the extension portion 331b extends to the end portion 114 of the wearing portion 112 along the side wall of the wearing portion 112.

The length of the connection portion 331a may be adjusted according to the positions of the acoustic outlet 334 of the waveguide 33 and the speaker 31. The maximum length L1 of the connection portion 331a is about 0.8 times to 5 times the maximum thickness W3 of the extension portion 331b. In this embodiment, the maximum length L1 of the connection portion 331a is about 2 times the maximum thickness W3 of the extension portion 331b. The maximum length L1 and the maximum thickness W3 are measured in the extension direction D1. The minimum thickness T2 of the extension portion 331b is in a range from about 3 mm to 8 mm. The minimum thickness T2 is measured in a direction that is perpendicular to the extension direction D1.

In this embodiment, the extension portion 331b includes longitudinal sections 335 and transverse sections 336. The longitudinal sections 335 are connected to the transverse sections 336. For example, two of the longitudinal sections 335 are connected to two ends of one of the transverse sections 336. The longitudinal sections 335 and the transverse sections 336 are alternately arranged along the wave path P1. In some embodiments, the longitudinal sections 335 are parallel to each other, and extend in the extension direction D1. The transverse sections 336 are parallel to each other, and extend in the extension direction D2.

In this embodiment, in order to install the speaker 31 to the head-mounted display apparatus 1, the size and power of the speaker 31 are limited. Therefore, the sound generated by speaker 31 has less bass, which makes it harder for the sound quality of the speaker 31 to meet requirements. For example, speaker 31 has about 5 W of power.

However, with the structure and size of the waveguide 33 (and the resonance box 32), the sound generated by the acoustic device 30 may be of good quality and have sufficient bass. Therefore, the head-mounted display apparatus 1 of the present disclosure may provide good quality sound even when the acoustic device 30 does not come into direct contact with the user's ears E1.

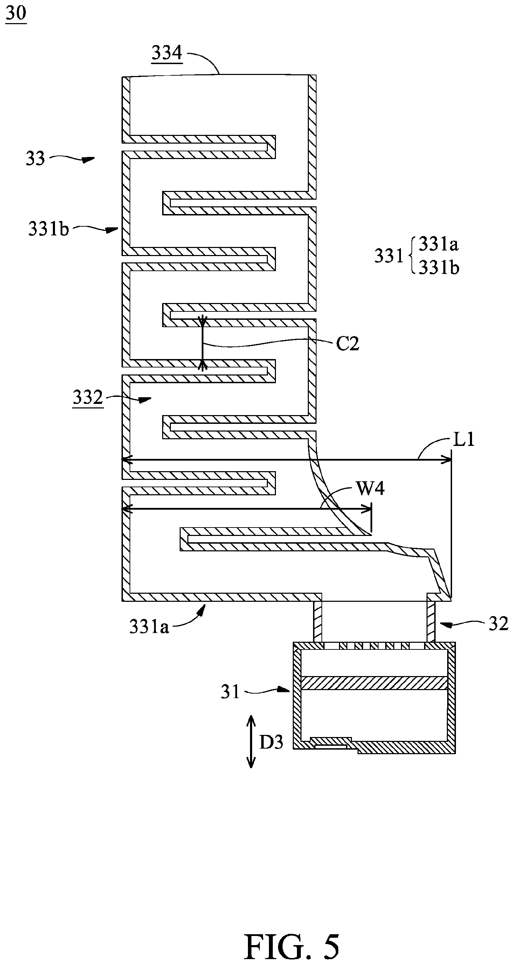

Fig. 5 is a schematic view of the acoustic device 30 in accordance with the second embodiment of the disclosure. In this embodiment, the volume of the waveguide cavity 332 is about 3.8 cm³. The length of the waveguide 33 is about 17 cm. The minimum cross-sectional area C2 of the waveguide cavity 332 perpendicular to the extension direction D1 is about 12 square millimeters. The area of the acoustic outlet 334 is about 15 square millimeters.

In this embodiment, the maximum thickness W4 of the extension portion 331b is greater than the maximum thickness W3 of the extension portion 331b in the first embodiment. The maximum length L1 of the connection portion 331a is about 1.2 times the maximum thickness W4 of the extension portion 331b.

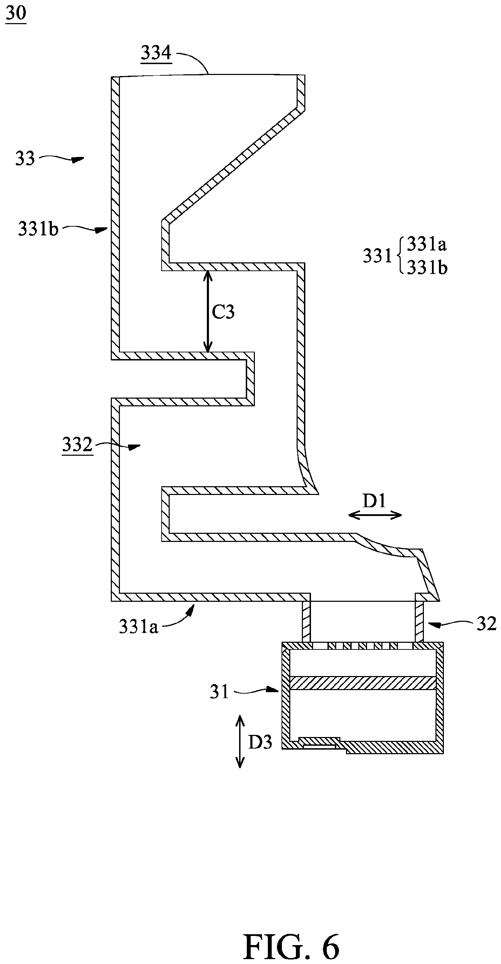

Fig. 6 is a schematic view of the acoustic device 30 in accordance with the third embodiment of the disclosure. In this embodiment, the volume of the waveguide cavity 332 is about 3.4 cm³. The length of the waveguide 33 is about 10 cm. The minimum cross-sectional area C3 of the waveguide cavity 332 perpendicular to the extension direction D1 is about 23 square millimeters. The area of the acoustic outlet 334 is about 15 square millimeters.

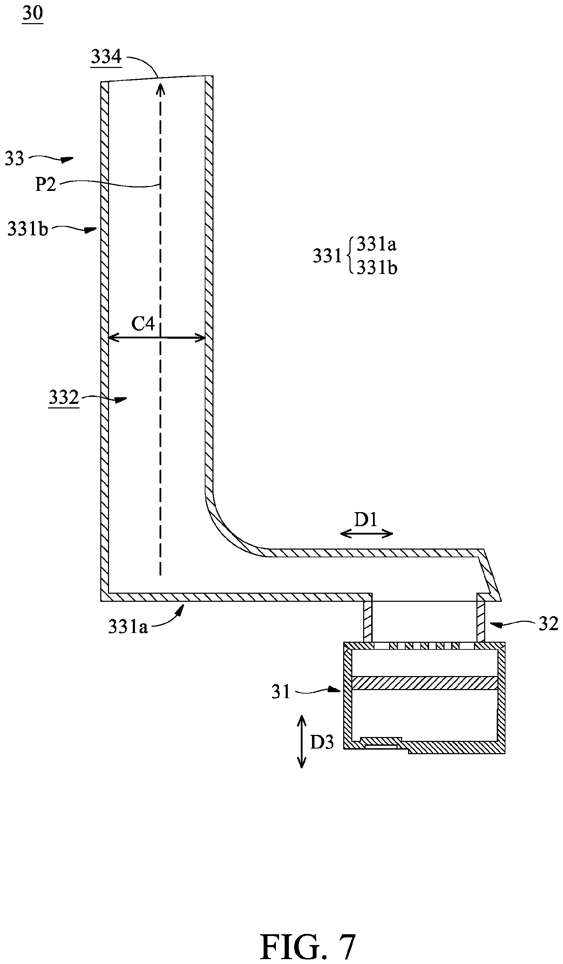

Fig. 7 is a schematic view of the acoustic device 30 in accordance with the fourth embodiment of the disclosure. In this embodiment, the waveguide 33 are L-shaped. The extension portion 331b extends along a linear path P2. The linear path P2 is perpendicular to the extension direction D1, and extends in the extension direction D2 (such as Fig. 3).

In this embodiment, the volume of the waveguide cavity 332 is about 3.3 cm³. The length of the waveguide 33 is about 7 cm. The minimum cross-sectional area C4 of the waveguide cavity 332 perpendicular to the linear path P2 is about 27 square millimeters. The area of the acoustic outlet 334 is about 9 square millimeters.

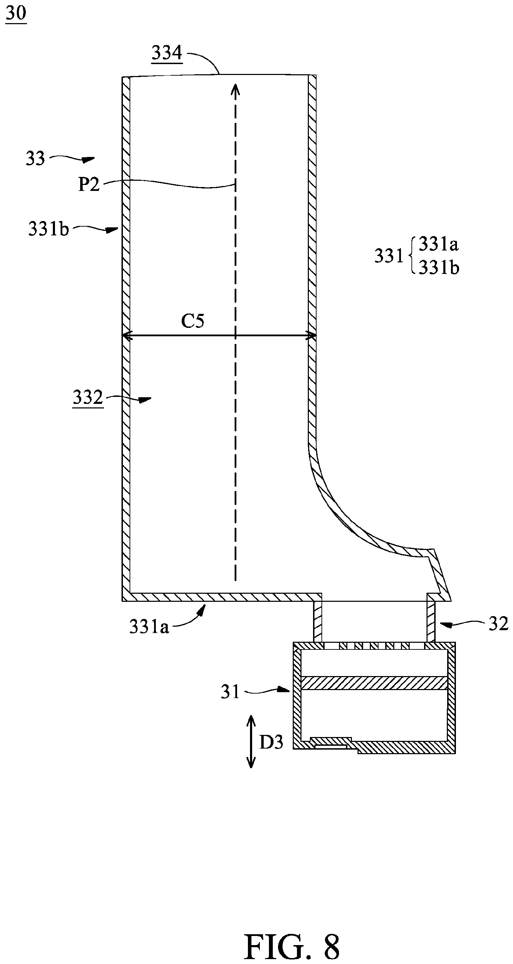

Fig. 8 is a schematic view of the acoustic device 30 in accordance with the fifth embodiment of the disclosure. In this embodiment, the waveguide 33 is L-shaped. The extension portion 331b extends along a linear path P2. In this embodiment, the volume of the waveguide cavity 332 is about 4.2 cm³. The length of the waveguide 33 is about 5 cm. The minimum cross-sectional area C5 of the waveguide cavity 332 perpendicular to the linear path P2 is about 46 square millimeters. The area of the acoustic outlet 334 is about 15 square millimeters.

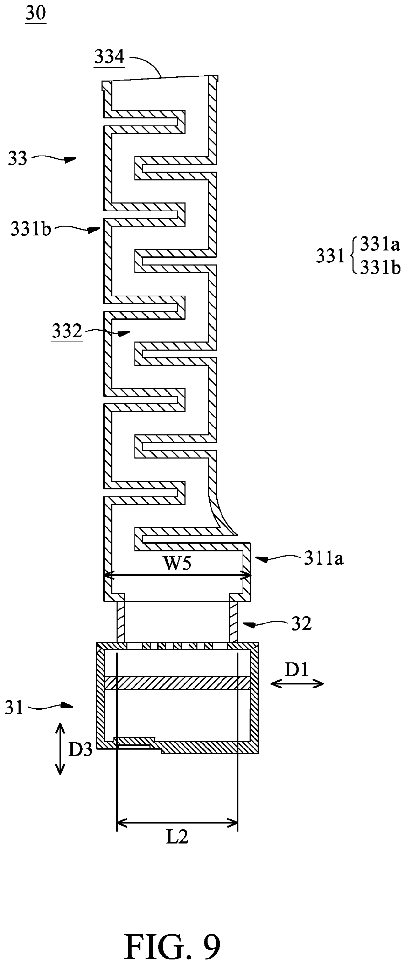

Fig. 9 is a schematic view of the acoustic device 30 in accordance with the sixth embodiment of the disclosure. In this embodiment, the maximum length L2 of the connection portion 331a is about 1 time the maximum thickness W5 of the extension portion 331b. The speaker 31, the resonance box 32, the connection portion 331a, and the extension portion 331b are substantially arranged in the extension direction D2 (as shown in Fig. 3) or the extension direction D3. In other words, the speaker 31, the resonance box 32, the connection portion 331a, and the extension portion 331b are substantially arranged perpendicular to the extension direction D1.

The first to fifth embodiments of the present disclosure may be based on the design of the connection portion 331a of this embodiment. Accordingly, the speaker 31, the resonance box 32, the connection portion 331a, and the extension portion 331b can be substantially arranged in the extension direction D2 (as shown in FIG. 3) or in the extension direction D3 in order to match the positions of the speaker 31 and the acoustic outlet 334 in the outer casing 11.

In conclusion, the head-mounted display apparatus of the present disclosure can provide sound to the user without contacting the user's ears by the acoustic device, thereby reducing the health problems caused by the user wearing the head-mounted display apparatus. Moreover, the sound quality of the acoustic device can be improved by the design of the waveguide.

While the invention has been described by way of example and in terms of preferred embodiment, it should be understood that the invention is limited by the appended claims.

## Claims

1. A head-mounted display apparatus (1), comprising:
a display device (10) comprising:
an outer casing (11) comprising a display portion (111) and a wearing portion (112) connected to the display portion (111); and
a display panel (12) disposed in the display portion (111);
an acoustic device (30) comprising:
a speaker (31) disposed in the outer casing (11), and adjacent to the display panel (12), the speaker (31) comprising a speaker housing (311) and a diaphragm (312) disposed in the speaker housing (311), and the speaker housing (311) comprising:
an acoustic surface (3112);
an acoustic outlet (3113) formed on the acoustic surface (3112); and
a rear surface (3114) opposite to the acoustic surface (3112);
and wherein the acoustic device further comprising a resonance box (32) connected to the acoustic surface (3112) of the speaker housing (311); and
a waveguide (33) connected to the resonance box (32) and the wearing portion (112); and
and wherein the head-mounted display apparatus further comprising a wearing structure (20) connected to the outer casing (11),
wherein a volume of the waveguide (33) is greater than 2 times a volume of the speaker (31), and a length of the waveguide (33) which is measured along a wave path (P1) is greater than 5 times the thickness of the speaker (31) between the acoustic surface (3112) and the rear surface (3114),
wherein the waveguide (33) comprises a connection portion (331a) connected to the resonance box (32) and an extension portion (331b) connected to the connection portion (331a),
wherein a maximum length (L1) of the connection portion (331a) which is measured in an extension direction (D1) is about 0.8 times to 5 times the maximum thickness (W3) of the extension portion (331b) which is measured in the extension direction (D1), wherein the minimum thickness (T2) of the extension portion (331b) is in a range from about 3 mm to 8 mm,
wherein the connection portion (331a) extends in the extension direction (D1), and the extension portion (331b) extends in a direction that is perpendicular to the extension direction (D1).

2. The head-mounted display apparatus (1) as claimed in claim 1, wherein the display device (10) further comprises a plurality of lenses (13) that are disposed on the display portion (111) and that face the display panel (12).

3. The head-mounted display apparatus (1) as claimed in claim 1, wherein the speaker (31) is located in the display portion (111), and the waveguide has an acoustic outlet (334) located at an end portion (114) of the wearing portion (112).

4. The head-mounted display apparatus (1) as claimed in claim 1, wherein the length of the waveguide (33) is in a range from about 5 cm to 20 cm.

5. The head-mounted display apparatus (1) as claimed in claim 1, wherein the connection portion (331a) is connected to the resonance box (32), the extension portion (331b) is connected to the connection portion (331a), and the extension portion (331b) extends along the wave path (P1).

6. The head-mounted display apparatus (1) as claimed in claim 1, wherein the connection portion (331a) is connected to the resonance box (32), the extension portion (331b) is connected to the connection portion (331a), and the extension portion (331b) substantially extends along a linear path.

7. The head-mounted display apparatus (1) as claimed in claim 1, wherein the resonance box (32) and the waveguide (33) are made of a hard material.

8. The head-mounted display apparatus (1) as claimed in claim 1, wherein the speaker housing (311) has a receiving cavity (3111), and the diaphragm (312) is disposed in the receiving cavity (3111), wherein a volume of the receiving cavity (3111) is in a range from about 0.6 cm³ to 2 cm³.

9. The head-mounted display apparatus (1) as claimed in claim 8, wherein the waveguide (33) has a waveguide cavity (332), an acoustic inlet (323) connected to the waveguide cavity (332), and an acoustic outlet (334) connected to the waveguide cavity (332), wherein the acoustic inlet (323) and the acoustic outlet (334) of the waveguide (33) are located at two opposite sides of the waveguide cavity (332), the acoustic inlet (323) of the waveguide (33) faces the resonance box (32), and a volume of the waveguide cavity (332) is in a range from about 2 cm³ to 8 cm³.

10. The head-mounted display apparatus (1) as claimed in claim 8, wherein the resonance box (32) has a resonance cavity (322), an acoustic inlet (323) connected to the resonance cavity (322), and the acoustic outlet (3113) connected to the resonance cavity (322), wherein the acoustic inlet (323) of the resonance box (32) corresponds to the diaphragm (312), the acoustic outlet (3113) of the resonance box (32) faces the waveguide (33), and a volume of the resonance cavity (322) is less than or equal to the volume of the receiving cavity (3111).

11. The head-mounted display apparatus (1) as claimed in claim 8, wherein the acoustic outlet (3113) is connected to the receiving cavity (3111), wherein the diaphragm (312) is adjacent to the acoustic surface (3112), and the resonance box (32) is connected to the acoustic surface (3112).

## Patentansprüche

1. Kopfmontierte Anzeigevorrichtung (1), die Folgendes umfasst:
eine Anzeigevorrichtung (10) mit:
ein Außengehäuse (11) mit einem Anzeigeteil (111) und einem mit dem Anzeigeteil (111) verbundenen Verschleißteil (112); und
eine Anzeigetafel (12), die in dem Anzeigeteil (111) angeordnet ist;
eine akustische Vorrichtung (30) mit:
einen Lautsprecher (31), der in dem äußeren Gehäuse (11) und benachbart zu dem Anzeigefeld (12) angeordnet ist, wobei der Lautsprecher (31) ein Lautsprechergehäuse (311) und eine in dem Lautsprechergehäuse (311) angeordnete Membran (312) umfasst, und wobei das Lautsprechergehäuse (311) umfasst:
eine akustische Oberfläche (3112);
einen akustischen Auslass (3113), der auf der akustischen Oberfläche (3112) ausgebildet ist; und
eine Rückfläche (3114), die der akustischen Fläche (3112) gegenüberliegt;
und wobei die akustische Vorrichtung ferner Folgendes umfasst
eine Resonanzbox (32), die mit der akustischen Oberfläche (3112) des Lautsprechergehäuses (311) verbunden ist; und
einen Hohlleiter (33), der mit dem Resonanzkasten (32) und dem Verschleißteil (112) verbunden ist; und
wobei die am Kopf montierte Anzeigevorrichtung ferner Folgendes umfasst:
eine Verschleißstruktur (20), die mit dem Außengehäuse (11) verbunden ist,
wobei ein Volumen des Wellenleiters (33) größer ist als das 2-fache Volumen des Lautsprechers (31) und eine Länge des Wellenleiters (33), die entlang eines Wellenweges (P1) gemessen wird, größer ist als das 5-fache der Dicke des Lautsprechers (31) zwischen der akustischen Oberfläche (3112) und der hinteren Oberfläche (3114),
wobei der Wellenleiter (33) einen mit dem Resonanzkasten (32) verbundenen Verbindungsabschnitt (331a) und einen mit dem Verbindungsabschnitt (331a) verbundenen Verlängerungsabschnitt (331b) umfasst,
wobei eine maximale Länge (L1) des Verbindungsabschnitts (331a), die in einer Erstreckungsrichtung (D1) gemessen wird, etwa das 0,8- bis 5-fache der maximalen Dicke (W3) des Verlängerungsabschnitts (331b) beträgt, die in der Erstreckungsrichtung (D1) gemessen wird, wobei die minimale Dicke (T2) des Verlängerungsabschnitts (331b) in einem Bereich von etwa 3 mm bis 8 mm liegt,
wobei der Verbindungsabschnitt (331a) sich in der Erstreckungsrichtung (D1) erstreckt und der Verlängerungsabschnitt (331b) sich in einer Richtung erstreckt, die senkrecht zur Erstreckungsrichtung (D1) ist.

2. Kopfmontierte Anzeigevorrichtung (1) nach Anspruch 1, wobei die Anzeigevorrichtung (10) ferner eine Vielzahl von Linsen (13) umfasst, die auf dem Anzeigeabschnitt (111) angeordnet sind und dem Anzeigefeld (12) zugewandt sind.

3. Kopfmontierte Anzeigevorrichtung (1) nach Anspruch 1, wobei der Lautsprecher (31) im Anzeigeteil (111) angeordnet ist und der Wellenleiter einen akustischen Auslass (334) aufweist, der an einem Endteil (114) des Tragteils (112) angeordnet ist.

4. Kopfmontierte Anzeigevorrichtung (1) nach Anspruch 1, wobei die Länge des Wellenleiters (33) in einem Bereich von etwa 5 cm bis 20 cm liegt.

5. Kopfmontierte Anzeigevorrichtung (1) nach Anspruch 1, wobei der Verbindungsabschnitt (331a) mit dem Resonanzkasten (32) verbunden ist, der Verlängerungsabschnitt (331b) mit dem Verbindungsabschnitt (331a) verbunden ist und der Verlängerungsabschnitt (331b) sich entlang des Wellenpfades (P1) erstreckt.

6. Kopfmontierte Anzeigevorrichtung (1) nach Anspruch 1, wobei der Verbindungsabschnitt (331a) mit dem Resonanzkasten (32) verbunden ist, der Verlängerungsabschnitt (331b) mit dem Verbindungsabschnitt (331a) verbunden ist und der Verlängerungsabschnitt (331b) sich im Wesentlichen entlang eines linearen Weges erstreckt.

7. Kopfmontierte Anzeigevorrichtung (1) nach Anspruch 1, wobei der Resonanzkasten (32) und der Wellenleiter (33) aus einem harten Material bestehen.

8. Kopfmontierte Anzeigevorrichtung (1) nach Anspruch 1, wobei das Lautsprechergehäuse (311) einen Aufnahmehohlraum (3111) aufweist und die Membran (312) in dem Aufnahmehohlraum (3111) angeordnet ist, wobei ein Volumen des Aufnahmehohlraums (3111) in einem Bereich von etwa 0,6 cm³ bis 2 cm³ liegt.

9. Kopfmontierte Anzeigevorrichtung (1) nach Anspruch 8, wobei der Wellenleiter (33) einen Wellenleiterhohlraum (332), einen mit dem Wellenleiterhohlraum (332) verbundenen akustischen Einlass (323) und einen mit dem Wellenleiterhohlraum (332) verbundenen akustischen Auslass (334) aufweist, wobei der akustische Einlass (323) und der akustische Auslass (334) des Wellenleiters (33) an zwei gegenüberliegenden Seiten des Wellenleiterhohlraums (332) angeordnet sind, der akustische Einlass (323) des Wellenleiters (33) dem Resonanzkasten (32) zugewandt ist und ein Volumen des Wellenleiterhohlraums (332) in einem Bereich von etwa 2 cm³ bis 8 cm³ liegt.

10. Kopfmontierte Anzeigevorrichtung (1) nach Anspruch 8, wobei die Resonanzbox (32) einen Resonanzhohlraum (322), einen mit dem Resonanzhohlraum (322) verbundenen akustischen Einlass (323) und den mit dem Resonanzhohlraum (322) verbundenen akustischen Auslass (3113) aufweist, wobei der akustische Einlass (323) des Resonanzgehäuses (32) der Membran (312) entspricht, der akustische Auslass (3113) des Resonanzgehäuses (32) dem Wellenleiter (33) zugewandt ist, und ein Volumen des Resonanzhohlraums (322) kleiner oder gleich dem Volumen des Aufnahmehohlraums (3111) ist.

11. Kopfmontierte Anzeigevorrichtung (1) nach Anspruch 8, wobei der akustische Auslass (3113) mit dem Aufnahmehohlraum (3111) verbunden ist, wobei die Membran (312) an die akustische Oberfläche (3112) angrenzt und die Resonanzbox (32) mit der akustischen Oberfläche (3112) verbunden ist.

## Revendications

1. Un visiocasque (1), comprenant :
un dispositif d'affichage (10) comportant :
un boîtier extérieur (11) comprenant une partie d'affichage (111) et une partie d'habillage (112) reliée à la partie d'affichage (111) ; et
un panneau d'affichage (12) disposé dans la partie d'affichage (111);
un dispositif acoustique (30) comprenant :
un haut-parleur (31) disposé dans le boîtier extérieur (11), et adjacent au panneau d'affichage (12), le haut-parleur (31) comprenant un boîtier de haut-parleur (311) et un diaphragme (312) disposé dans le boîtier de haut parleur (311), et le boîtier de haut-parleur comprenant :
une surface acoustique (3112) ;
une sortie acoustique (3113) formée sur la surface acoustique (3112) ; et
une surface arrière (3114) opposée à la surface acoustique (3112) ;
et dans lequel le dispositif acoustique comprend en outre
une boîte de résonance (32) connectée à la surface acoustique (3112) du boîtier de haut-parleur (311) ; et
un guide d'onde (33) relié à la boîte de résonance (32) et à la partie d'habillage (112) ; et
dans lequel le visiocasque (33) comporte en outre une structure d'habillage (20) reliée au boîtier extérieur (11),
dans lequel un volume du guide d'onde (33) est plus de deux fois supérieur à un volume du haut-parleur (31), et une longueur du guide d'onde (33) qui est mesurée le long d'un chemin d'onde (P1) est supérieure à 5 fois l'épaisseur du haut parleur (31) entre la surface acoustique (3112) et la surface arrière (3114),
dans lequel le guide d'onde (33) comporte une partie de connexion (331a) connectée à la boite de résonnance (32) et une partie d'extension (331b) connectée à la partie de connexion (331a),
dans lequel une longueur maximale (L1) de la partie de connexion (331a) qui est mesurée suivant une direction d'extension (D1) est environ 0.8 fois à 5 fois l'épaisseur maximale (W3) de la partie d'extension (331b) qui est mesurée dans la direction d'extension (D1), dans lequel l'épaisseur minimale (T2) de la partie d'extension (331b) est dans une plage d'environ 3 mm à 8 mm,
dans lequel la partie de connexion (331a) s'étend suivant la direction d'extension (D1) et la partie d'extension (331b) s'étend suivant une direction qui est perpendiculaire à la direction d'extension (D1).

2. Le visiocasque (1) tel que revendiqué dans la revendication 1, dans lequel le dispositif d'affichage (10) comprend en outre une pluralité de lentilles (13) qui sont disposées sur la partie d'affichage (111) et faisant face au panneau d'affichage (12).

3. Le visiocasque (1) tel que revendiqué dans la revendication 1, dans lequel le haut-parleur (31) est situé dans la partie d'affichage (111), et le guide d'ondes a une sortie acoustique (334) située au niveau d'une partie d'extrémité de la partie d'habillage (112).

4. Le visiocasque (1) tel que revendiqué dans la revendication 1, dans lequel la longueur du guide d'onde (33) est dans une plage d'environ 5cm à 20cm.

5. Le visiocasque (1) tel que revendiqué dans la revendication 1, dans lequel la partie de connexion (331a) est connectée à la boîte de résonance (32), la partie d'extension (331b) est connectée à la partie de connexion (331a) et la partie d'extension (331b) s'étend le long du chemin d'onde (P1).

6. Le visiocasque (1) tel que revendiqué dans la revendication 1, dans lequel la partie de connexion (331a) est connectée à la boîte de résonnance (32), la partie d'extension (331b) est connectée à la partie de connexion (331a), et la partie d'extension (331b) s'étend substantiellement le long d'un chemin linéaire.

7. Le visiocasque (1) tel que revendiqué dans la revendication 1, dans lequel la boîte de résonance (32) et le guide d'ondes (33) sont réalisés en un matériau dur.

8. Le visiocasque (1) tel que revendiqué dans la revendication 1, dans lequel le logement (311) de haut-parleur comprend une cavité de réception (3111), et le diaphragme (312) est disposé dans la cavité de réception (3111), dans lequel un volume de la cavité de réception (3111) est dans une plage d'environ 0,6 cm³ à 2 cm³.

9. Le visiocasque (1) tel que revendiqué dans la revendication 8, dans lequel le guide d'ondes (33) a une cavité (332) de guide d'ondes, une entrée acoustique (323) connectée à la cavité (332) de guide d'ondes, et une sortie acoustique (334) connectée à la cavité (332) de guide d'ondes, dans lequel l'entrée acoustique (323) et la sortie acoustique (334) du guide d'ondes (33) sont situées au niveau de deux côtés opposés de la cavité (332) de guide d'ondes, l'entrée acoustique (323) du guide d'ondes (33) faisant face à la boîte de résonance (32), et un volume de la cavité (332) de guide d'ondes est dans une plage d'environ 2 cm³ à 8 cm³.

10. Le visiocasque (1) tel que revendiqué dans la revendication 8, dans lequel la boîte de résonance (32) a une cavité de résonance (322), une entrée acoustique (323) reliée à la cavité de résonance (322), et une sortie acoustique (3113) reliée à la cavité de résonance (322), dans lequel l'entrée acoustique (323) de la boîte de résonance (32) correspond au diaphragme (312), la sortie acoustique (3113) de la boîte de résonance (32) faisant face au guide d'ondes (33), et un volume de la cavité de résonance (322) est inférieur ou égal au volume de la cavité de réception (3111).

11. Le visiocasque (1) tel que revendiqué dans la revendication 8, dans lequel la sortie acoustique (3113) est reliée à la cavité de réception (3111), dans lequel le diaphragme (312) est adjacent à la surface acoustique (3112), et la boîte de résonance (32) est reliée à la surface acoustique (3112).
